# EUROPEAN PATENT APPLICATION

(11) **EP 4 105 015 A1**
(43) Date of publication of application: **21.12.2022**
(21) Application number: 21179783.2
(22) Date of filing: 16.06.2021
(51) Int. Cl.: B32B 7/10, B32B 25/08, B32B 27/08, B32B 27/20, B32B 27/30, B32B 27/32, B32B 27/34, B32B 27/36

(54) **THIN FILM SEALING DEVICE WITH IMPROVED ADHESION TO CONCRETE**

(71) Applicant: Sika Technology AG, 6340 Baar (CH)
(72) Inventor: DA RIN, Roman, 6020 Emmenbrücke (CH); FÄH, Christoph, 6010 Kriens (CH); FISCHER, Alessandro, 8700 Küsnacht (CH)
(74) Representative: Sika Patent Attorneys

(57) **Abstract**

The invention is directed to a sealing device comprising a polymeric carrier layer (2) having a first and a second major surface and a first functional layer (3) comprising 25 - 95 wt.-% of at least one polymer P1 and 5 - 75 wt.-% of at least one solid filler F, wherein the polymeric carrier layer (2) has a thickness of 10 - 450 µm µm and wherein the sealing device (1) has a mass per unit area of not more than 450 g/m². The invention is also directed to a method for producing a sealing device and to use of a sealing device as a waterproofing membrane, vapor barrier, vapor retarder, gas barrier membrane, volatile organic compound (VOC) barrier membrane, or as a geomembrane.

## Description

### Technical field

The invention relates to sealing devices for use in the construction industry for sealing of below or above ground building constructions against penetration of water, moisture, harmful gases, or volatile organic compounds. In particular, the invention relates to sealing devices that fully and permanently bond to fresh cementitious compositions after hardening.

### Background Art

In the field of construction polymeric sheets, which are often referred to as membranes, panels, sheets, or liners, are used to protect underground and above ground constructions, such as base slabs, walls, floors, basements, tunnels, wet rooms, building facades, flat and low-sloped roofs, landfills, water-retaining structures, ponds, and dikes against penetration of water, moisture, harmful gases, and volatile organic compounds. Waterproofing membranes are applied, for example, to prevent ingress of water through cracks that develop in the concrete structure due to building settlement, load deflection or concrete shrinkage. Roofing membranes are used for sealing of flat and low-sloped roof structures to prevent leaks and to move take water off the roof.

Vapor retarders and barriers are used to control the movement of water through a building structure by vapor diffusion. Vapor retarders are provided with different water vapor permeance properties or permeability and they are commonly provided as coatings or multilayer composites composed of several thin films or as structural vapor retarders. Waterproofing façade tapes are used for sealing of construction gaps in building facades, for example to seal gaps between a building structure and window or curtain wall components. Waterproofing membranes are also used in heavy loaded commercial and residential wet rooms, shower rooms or therapy rooms in hospitals, and on balconies, terraces and in swimming pools to protect the structures against penetration of water. Gas and VOC barriers are used for restricting the ingress of radon, carbon dioxide, and volatile organic compounds (VOC) into buildings from landfill and naturally occurring sources. They are usually provided as plastic sheets comprising one or more barrier layers that prevent the passage of harmful substances. Gas and VOC barriers are typically used in ground floors above and below concrete slabs that are not subjected to hydrostatic pressure. Commercially available gas barriers include, for example, radon barrier membranes, liquid gas membranes, and self-adhesive gas membranes.

Membranes can be "post-applied" to an existing concrete structure or "pre-applied" before the structure to be sealed has been formed. Post-applied membranes can be adhered to a surface of the substrate, for example, by using adhesive bonding means and/or by using sealing tapes. The adhesive can be applied during installation to a surface of the membrane and/ or to a surface of the substrate. Furthermore, self-adhering membranes having a factory applied layer of a pressure sensitive adhesive on the bottom surface of the membrane can be used. Pre-applied membranes are placed on the surface of the underlying concrete structure or formwork and fresh concrete is then cast against the upper surface of the membrane thereby fully and permanently bonding the membrane to the surface of the hardening concrete body. Post-applied and pre-applied membranes typically comprise a barrier layer providing the membrane with required barrier properties and in addition one or more further layers that are used to improve the mechanical properties of the membrane and/or to improve bonding with adhesives or cementitious compositions.

Polymeric materials having a low surface energy, such as polyolefin-based materials, are notoriously difficult to bond with adhesives that are commonly used in the field of construction industry, such as epoxy adhesives, polyurethane adhesives, and cementitious compositions. Therefore, a pre-applied waterproofing membrane typically comprises a contact layer or coating, such as a layer of non-woven material and/or a layer of pressure sensitive adhesive, to enable bonding with cementitious compositions. Patent application WO2010043661 A1 discloses a waterproofing membrane comprising a barrier layer and a composite layer, such as a layer of non-woven fabric, which is adhered to the barrier layer via a sealant layer. The disclosed waterproofing membrane has the disadvantage that the contact layer composed of the non-woven fabric and the sealant layer are not heat-weldable. Consequently, the seams formed between overlapped edges of adjacent membranes can only be sealed using sealing tapes and/or by adhesive means, which significantly increases the complexity of the installation process compared to heat-welding.

Another patent application WO2017108843 A1 discloses a waterproofing membrane having a barrier layer and at least one contact layer composed of a highly filed polymeric material that is operative to bond with cementitious composition. The membrane can be produced by die extruding or co-extruding compositions of the barrier and contact layer(s) to obtain an extruded sealing element having sufficient interlayer peel strength between the barrier and contact layer(s). The extrusion process disclosed in WO2017108843 A1 is especially suitable for producing membranes, where the thickness of the barrier layer is at least 0.5 mm, preferably at least 0.75 mm. However, polymeric membranes used as vapor, gas, or VOC barriers or for waterproofing of wet rooms, balconies, and swimming pools, typically comprise a barrier layer having thickness of not more than 450 µm. Although producing multi-layer membranes having a total thickness of 0,5 mm or below using conventional flat die or cast extrusion techniques might be possible it is nevertheless challenging and certainly not a preferred alternative.

There is thus a need for a new type of sealing device comprising a barrier layer and at least one layer that is operative to bond with cementitious compositions, which polymeric membrane is suitable for use as a waterproofing membrane or as a vapor, gas, or a VOC barrier membrane.

### Summary of the invention

The objective of the present invention is to provide a sealing device, which can be used to protect surfaces against penetration water, moisture, harmful gases, or VOCs, and which fully and permanently bonds to cementitious compositions after hardening as well as to adhesives commonly used in the construction industry.

It was surprisingly found out that a sealing device comprising a thin polymeric carrier layer having and a functional layer that is operative to bond with fresh cementitious compositions is suitable for use as a waterproofing membrane, for example, in wet room applications, or as a vapor, gas, or a VOC barrier membrane.

The subject of the present invention is a sealing device according to claim 1.

One of the advantages of the sealing device of the present invention is that the since the functional layer is operative to bond with cementitious compositions, the sealing device can be provided without any additional contact layers and can consequently be produced with reduced costs compared to prior art membranes.

Other aspects of the present invention are presented in other independent claims. Preferred aspects of the invention are presented in the dependent claims.

### Brief description of the Drawings

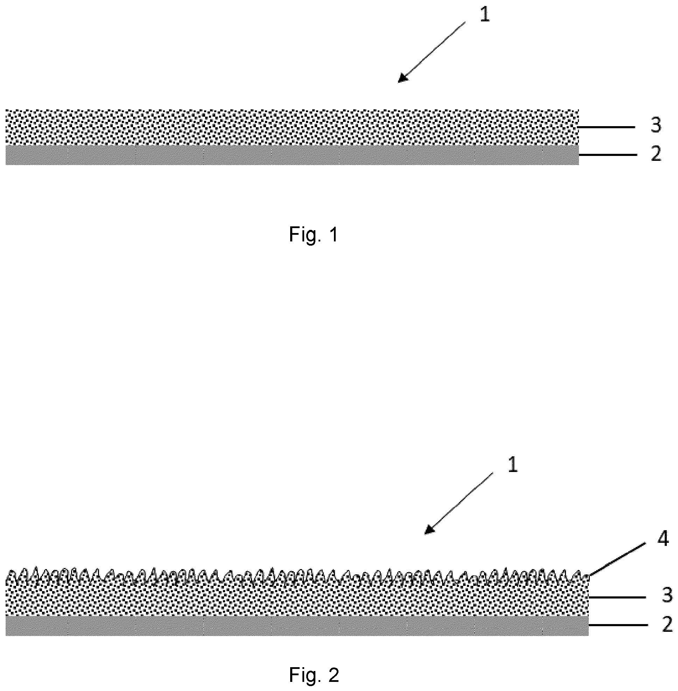

Fig. 1 shows a cross-section of a sealing device (1) comprising a polymeric carrier layer (2) having a first and second major surfaces and a first functional layer (3) directly connected to the first major surface of the polymeric carrier layer (2).
Fig. 2 shows a cross-section of a sealing device (1) comprising a polymeric carrier layer (2) having first and second major surfaces and a first functional layer (3) directly connected to the first major surface of the polymeric carrier layer (2), wherein the first major surface of the first functional layer comprises a surface structure (4).

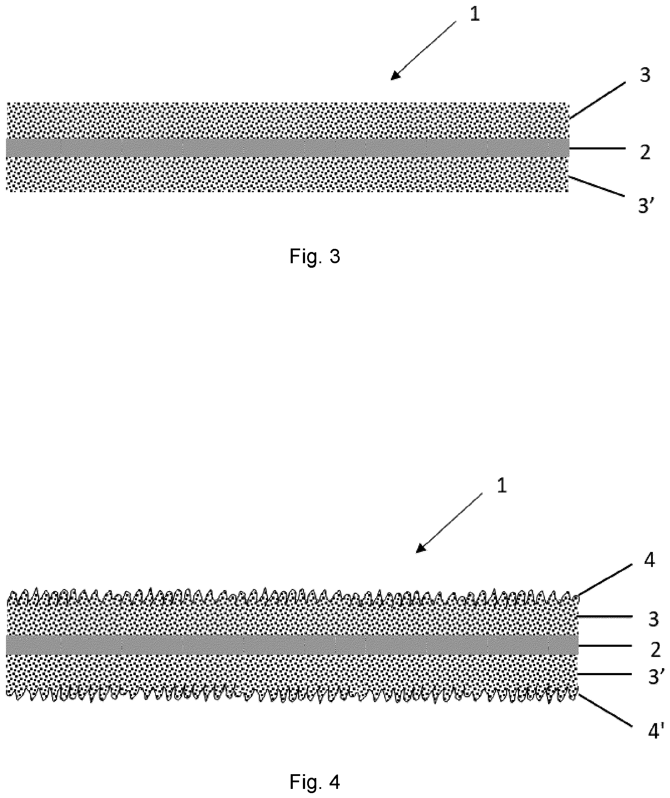

Fig. 3 shows a cross-section of a sealing device (1) comprising a polymeric carrier layer (2) having first and second major surfaces and first and second functional layers (3, 3'), wherein the first functional layer (3) is directly connected to the first major surface of the polymeric carrier layer (2) and the second functional layer (3') is directly connected to the second major surface of the polymeric carrier layer (2).
Fig. 4 shows a cross-section of a sealing device (1) comprising a polymeric carrier layer (2) and first and second functional layers (3, 3'), wherein the first functional layer (3) is directly connected to the first major surface of the polymeric carrier layer (2) and the second functional layer (3') is directly connected to the second major surface of the polymeric carrier layer (2) and the first major surface of the first functional layer comprises a surface structure (4) and the second major surface of the second functional layer comprises a surface structure (4').

### Detailed description of the invention

The subject of the present invention is a sealing device (1) comprising a polymeric carrier layer (2) and a first functional layer (3) comprising:
a) 25 - 95 wt.-%, preferably 35 -90 wt.-%, of at least one polymer **P1** and
b) 5 - 75 wt.-%, preferably 10 - 65 wt.-%, of at least one solid filler **F,**
all proportions being based on the total weight of the first functional layer (3), wherein
the polymeric carrier layer (2) has a thickness of 10 - 450 µm, preferably 25 - 350 µm, and wherein the first functional layer (3) has a mass per unit area of not more than 450 g/m², preferably not more than 350 g/m².

The term "polymer" refers to a collective of chemically uniform macromolecules produced by a polyreaction (polymerization, polyaddition, polycondensation) where the macromolecules differ with respect to their degree of polymerization, molecular weight, and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The term "copolymer" refers in the present disclosure to a polymer derived from more than one species of monomer ("structural unit"). The polymerization of monomers into copolymers is called copolymerization. Copolymers obtained by copolymerization of two monomer species are known as bipolymers and those obtained from three and four monomers species are called terpolymers and quaterpolymers, respectively.

The term "polyolefin" refers in the present disclosure to homopolymers and copolymers obtained by polymerization of olefins optionally with other types of comonomers.

The term "a-olefin" designates an alkene having the molecular formula CₓH₂ₓ (x corresponds to the number of carbon atoms), which features a carbon-carbon double bond at the first carbon atom (a-carbon). Examples of α-olefins include ethylene, propylene, 1-butene, 2-methyl-1-propene (isobutylene), 1-pentene, 1-hexene, 1-heptene and 1-octene. For example, neither 1,3-butadiene, nor 2-butene, nor styrene are referred as "a-olefins" according to the present document.

The term "rubber" refers in the present disclosure to a polymer or a polymer blend, which is capable of recovering from large deformations, and which can be, or already is, modified to a state in which it is essentially insoluble (but can swell) in a boiling solvent, in particular xylene. Typical rubbers are capable of being elongated or deformed to at least 200% of their original dimension under an externally applied force, and will substantially resume the original dimensions, sustaining only small permanent set (typically no more than about 20%), after the external force is released. As used herein, the term "rubber" may be used interchangeably with the term "elastomer."

The term "melting temperature" refers to a temperature at which a material undergoes transition from the solid to the liquid state. The melting temperature (Tₘ) is preferably determined by differential scanning calorimetry (DSC) according to ISO 11357 standard using a heating rate of 2 °C/min. The measurements can be performed with a Mettler Toledo DSC 3+ device and the Tₘ values can be determined from the measured DSC-curve with the help of the DSC-software. In case the measured DSC-curve shows several peak temperatures, the first peak temperature coming from the lower temperature side in the thermogram is taken as the melting temperature (Tₘ).

The "amount or content of at least one component X" in a composition, for example "the amount of the at least one thermoplastic polymer P1" refers to the sum of the individual amounts of all thermoplastic polymers P1 contained in the composition. For example, in case the composition comprises 20 wt.-% of at least one thermoplastic polymer P1, the sum of the amounts of all thermoplastic polymers P1 contained in the composition equals 20 wt.-%.

The term "normal room temperature" refers to the temperature of 23 °C.

The sealing device of the present invention comprises a polymeric carrier layer and a first functional layer. The term "layer" refers in the present disclosure generally to a sheet-like element having first and second major surfaces, i.e. top and bottom surfaces, and a thickness defined there between. Preferably, a layer has a length and width of at least 5 times, more preferably at least 15 times, even more preferably at least 25 times, greater than the maximum thickness of the layer. The term "polymeric layer" refers in the present disclosure to a layer comprising a continuous phase composed of one or more polymers.

The polymeric carrier layer has a thickness of 10 - 450 µm, preferably 25 - 350 µm, more preferably 35 - 250 µm, even more preferably 40 - 200 µm, still more preferably 50 - 150 µm. According to one or more preferred embodiments, polymeric carrier layer has a thickness of 10 - 150 µm, preferably 15 - 125 µm, more preferably 20 - 100 µm, even more preferably 25 - 100 µm. The thickness of the polymeric carrier layer is preferably measured using the method as defined in DIN EN 1849-2 standard using an optical microscope, such as of type Keyence VHX-600 with 30-fold magnification.

The first functional layer has a mass per unit area of not more than 450 g/m², preferably not more than 350 g/m², more preferably not more than 250 g/m², even more preferably not more than 200 g/m², still more preferably not more than 150 g/m². According to one or more preferred embodiments, the first functional layer has a mass per unit area of 10 - 350 g/m², preferably 15 - 250 g/m², more preferably 25 - 200 g/m², even more preferably 35 - 150 g/m², still more preferably 50 - 125 g/m². The mass per unit area of the sealing device can be determined by measuring the mass of a test piece of the sealing device having a given area and dividing the mass by the area of the test piece.

Preferably, the polymeric carrier layer and the first functional layer are directly connected to each other over at least a portion of their opposing major surfaces. The expression "directly connected" is understood to mean in the context of the present invention that no further layer or substance is present between the layers, and that the opposing surfaces of the two layers are directly bonded to each other or adhere to each other. At the transition area between the two layers, the materials forming the layers can also be present mixed with each other.

Preferably, the first functional layer has first and second major surfaces, wherein at least 50 %, more preferably at least 75 wt.-%, even more preferably at least 95 % of the area of the second major surface of the first functional layer is directly connected to the first major surface of the polymeric carrier layer. According to one or more embodiments, essentially the entire area of the second major surface of the first functional layer is directly connected to the first major surface of the polymeric carrier layer. The expression "essentially entire" is understood to mean in the context of the present invention at least 97.5 %, preferably at least 99 %.

Preferable, the first functional layer covers at least 50 %, more preferably at least 75 %, even more preferably at least 95 %, of the area of the first major surface of the polymeric carrier layer. According to one or more embodiments, the first functional layer covers essentially the entire area of the first major surface of the polymeric carrier layer.

The first functional layer comprises as a first compulsory constituent at least one polymer **P1.** According to one or more embodiments, the at least one polymer **P1** has:
- a melting temperature (Tₘ) determined by DSC according to ISO 11357 standard in the range of 55 - 250 °C, preferably 60 - 200 °C, more preferably 65 - 185 °C, even more preferably 70 - 175 °C, still more preferably 75 -165 °C and/or
- a melt flow rate a melt flow rate determined according to ISO 1133 (190 °C/2.16 kg) of not more than 250 g/10 min, preferably not more than 150 g/10 min, more preferably not more than 100 g/10 min, even more preferably not more than 75 g/10 min, still more preferably not more than 50 g/10 min and/or
- a glass transition temperature (T_{g}) determined by dynamical mechanical analysis (DMA) as the peak of the measured loss modulus (G") curve using an applied frequency of 1 Hz and a strain level of 0.1 % of at or below 0 °C, preferably at or below -10 °C, more preferably at or below -20 °C, even more preferably at or below -25 °C, still more preferably at or below -30 °C and/or
- a flexural modulus at 23 °C determined according to ISO 178 standard of not more than 1000 MPa, preferably not more than 750 MPa, more preferably not more than 500 MPa, even more preferably not more than 350 MPa, still more preferably not more than 250 MPa, most preferably not more than 150 MPa.

Suitable polymers for use as the at least one polymer **P1** include, for example, polyvinylchloride, polyolefins, halogenated polyolefins, rubbers, and ethylene ketone esters.

Suitable polyolefins for use as the at least one polymer **P1** include ethylene-based polyolefins, for example, polyethylenes, and ethylene copolymers, such as copolymers of ethylene and one or more α-olefins, copolymers of ethylene and vinyl acetate, and copolymers of ethylene and acrylic esters. Further suitable polyolefins include propylene-based polyolefins, for example polypropylenes and propylene copolymers, such as copolymers propylene and one or more α-olefins.

Suitable rubbers for use as the at least one polymer **P1** include, for example, butyl rubber, halogenated butyl rubber, ethylene-propylene diene monomer rubber (EPDM), natural rubber, chloroprene rubber, synthetic 1,4-cis-polyisoprene, polybutadiene, ethylene propylene rubber (EPR), styrenebutadiene rubber (SBR), isoprene-butadiene copolymer, styrene-isoprene-butadiene rubber, methyl methacrylate-butadiene copolymer, methyl methacrylate-isoprene copolymer, acrylonitrile-isoprene copolymer, and acrylonitrile-butadiene copolymer.

According to one or more embodiment, the at least one polymer **P1** comprises at least one thermoplastic polymer, preferably selected from the group consisting of polyvinylchloride, polyethylene, ethylene α-olefin copolymers, ethylene acrylic ester copolymers, ethylene vinyl acetate copolymers, polypropylene, and propylene α-olefin copolymers, more preferably from the group consisting of polyvinylchloride, polyethylene, ethylene α-olefin copolymers, ethylene acrylic ester copolymers, and ethylene vinyl acetate copolymers, even more preferably from the group consisting of polyethylene, ethylene α-olefin copolymers, ethylene acrylic ester copolymers, and ethylene vinyl acetate copolymers.

Suitable polyethylenes include, for example, very-low-density polyethylene, low-density polyethylene, linear low-density polyethylene, medium-density polyethylene, high-density polyethylene, and ultra-high-molecular-weight polyethylene, particularly low-density polyethylene, linear low-density polyethylene, medium-density polyethylene, high-density polyethylene.

Suitable ethylene α-olefin copolymers include random and block copolymers of ethylene and one or more C₃-C₂₀ α-olefin monomers, particularly one or more of propylene, 1-butene, 1-pentene, 1-hexene, 1-heptene, 1-octene, 1-decene, 1-dodecene, and 1-hexadodecene, preferably comprising at least 60 wt.-%, more preferably at least 65 wt.-% of ethylene-derived units, based on the weight of the copolymer.

Suitable ethylene random copolymers include, for example, ethylene-based plastomers, which are commercially available, for example, under the trade name of Affinity^{®}, such as Affinity^{®} EG 8100G, Affinity^{®} EG 8200G, Affinity^{®} SL 8110G, Affinity^{®} KC 8852G, Affinity^{®} VP 8770G, and Affinity^{®} PF 1140G (all from Dow Chemical Company); under the trade name of Exact^{®}, such as Exact^{®} 3024, Exact^{®} 3027, Exact^{®} 3128, Exact^{®} 3131, Exact^{®} 4049, Exact^{®} 4053, Exact^{®} 5371, and Exact^{®} 8203 (all from Exxon Mobil); and under the trade name of Queo^{®} (from Borealis AG) as well as ethylene-based polyolefin elastomers (POE), which are commercially available, for example, under the trade name of Engage^{®}, such as Engage^{®} 7256, Engage^{®} 7467, Engage^{®} 7447, Engage^{®} 8003, Engage^{®} 8100, Engage^{®} 8480, Engage^{®} 8540, Engage^{®} 8440, Engage^{®} 8450, Engage^{®} 8452, Engage^{®} 8200, and Engage^{®} 8414 (all from Dow Chemical Company).

Suitable ethylene-α-olefin block copolymers include ethylene-based olefin block copolymers (OBC), which are commercially available, for example, under the trade name of Infuse^{®}, such as Infuse^{®} 9100, Infuse^{®} 9107, Infuse^{®} 9500, Infuse^{®} 9507, and Infuse^{®} 9530 (all from Dow Chemical Company).

Suitable copolymers of ethylene and vinyl acetate include those having a content of a structural unit derived from vinyl acetate in the range of 4 - 95 wt.-%, preferably 6 - 90 wt.-%, more preferably 8 - 90 wt.-%, based on the weight of the copolymer. Suitable ethylene and vinyl acetate bipolymers and terpolymers, such as ethylene vinyl acetate carbon monoxide terpolymers, are commercially available, for example, under the trade name of Escorene^{®} (from Exxon Mobil), under the trade name of Primeva^{®} (from Repsol Quimica S.A.), under the trade name of Evatane^{®} (from Arkema Functional Polyolefins), under the trade name of Greenflex^{®} (from Eni versalis S.p.A.), and under the trade name of Levapren^{®} (from Arlanxeo GmbH), and under the trade name of Elvaloy^{®} (from Dupont).

Suitable polypropylenes include, for example, isotactic polypropylene (iPP), syndiotactic polypropylene (sPP), and homopolymer polypropylene (hPP).

Suitable propylene copolymers include propylene-ethylene random and block copolymers and random and block copolymers of propylene and one or more C₄-C₂₀ α-olefin monomers, in particular one or more of 1-butene, 1-pentene, 1-hexene, 1-heptene, 1-octene, 1-decene, 1-dodecene, and 1-hexadodecene, preferably comprising at least 60 wt.-%, more preferably at least 65 wt.-% of propylene-derived units, based on the weight of the copolymer.

Suitable propylene random and block copolymers are commercially available, for example, under the trade names of Intune^{®}, and Versify (from Dow Chemical Company) and under the trade name of Vistamaxx^{®} (from Exxon Mobil).

Further suitable propylene copolymers include heterophasic propylene copolymers. These are heterophasic polymer systems comprising a high crystallinity base polyolefin and a low-crystallinity or amorphous polyolefin modifier. The heterophasic phase morphology consists of a matrix phase composed primarily of the base polyolefin and a dispersed phase composed primarily of the polyolefin modifier. Suitable commercially available heterophasic propylene copolymers include reactor blends of the base polyolefin and the polyolefin modifier, also known as "in-situ TPOs" or "reactor TPOs or "impact copolymers (ICP)", which are typically produced in a sequential polymerization process, wherein the components of the matrix phase are produced in a first reactor and transferred to a second reactor, where the components of the dispersed phase are produced and incorporated as domains in the matrix phase. Heterophasic propylene copolymers comprising polypropylene homopolymer as the base polymer are often referred to as "heterophasic propylene copolymers (HECO)" whereas heterophasic propylene copolymers comprising polypropylene random copolymer as the base polymer are often referred to as "heterophasic propylene random copolymers (RAHECO)". The term "heterophasic propylene copolymer" encompasses in the present disclosure both the HECO and RAHECO types of the heterophasic propylene copolymers.

Depending on the amount of the polyolefin modifier, the commercially available heterophasic propylene copolymers are typically characterized as "impact copolymers" (ICP) or as "reactor-TPOs" or as "soft-TPOs". The main difference between these types of heterophasic propylene copolymers is that the amount of the polyolefin modifier is typically lower in ICPs than in reactor-TPOs and soft-TPOs, such as not more than 40 wt.-%, particularly not more than 35 wt.-%. Consequently, typical ICPs tend to have a lower xylene cold soluble (XCS) content determined according to ISO 16152 2005 standard as well as higher flexural modulus determined according to ISO 178:2010 standard compared to reactor-TPOs and soft-TPOs.

Suitable heterophasic propylene copolymers include reactor TPOs and soft TPOs produced with LyondellBasell's Catalloy process technology, which are commercially available under the trade names of Adflex^{®}, Adsyl^{®}, Clyrell^{®}, Hiflex^{®}, Softell^{®}, and Hifax^{®}, such as Hifax^{®} CA 10A, Hifax^{®} CA 12A, and Hifax^{®} CA 60 A, and Hifax CA 212 A. Further suitable heterophasic propylene copolymers are commercially available under the trade name of Borsoft^{®} (from Borealis Polymers), such as Borsoft^{®} SD233 CF.

According to one or more embodiments, the at least one polymer **P1** comprises at least one ethylene vinyl acetate copolymer. It may be preferred that the at least one ethylene vinyl acetate copolymer comprises at least 15 wt.-%, more preferably at least 35 wt.-%, even more preferably at least 50 wt.-%, of the total weight of the at least one polymer **P1.** According to one or more embodiments, the at least one ethylene vinyl acetate copolymer comprises at least 65 wt.-%, preferably at least 75 wt.-%, more preferably at least 85 wt.-%, still more preferably at least 95 wt.-%, of the total weight of the at least one polymer **P1.**

Generally, the expression "the at least one component X comprises at least one component XN", such as "the at least one polymer **P1** comprises at least one ethylene vinyl acetate copolymer" is understood to mean in the context of the present disclosure that the composition comprises one or more ethylene vinyl acetate copolymers as representatives of the at least one polymer **P1.** According to one or more embodiments, the at least one polymer **P1** comprises at least one soft ethylene vinyl acetate copolymer **P11** having:
- a content of a structural unit derived from vinyl acetate of 45 - 90 wt.-%, preferably 50 - 90 wt.-%, more preferably 55 - 90 wt.-%, even more preferably 60 - 90 wt.-%, still more preferably 65 - 85 wt.-%, based on the weight of the copolymer and/or
- A Mooney viscosity (ML 1+4 at 100°C) determined according to ISO 289:2005 of 1 - 100, preferably 5 - 85, more preferably 10 - 65, even more preferably 15 - 50.

According to one or more embodiments, the at least one polymer **P1** comprises at least one hard ethylene vinyl acetate copolymer **P12** having:
- a content of a structural unit derived from vinyl acetate of 5 - 40 wt.-%, preferably 5 - 35 wt.-%, more preferably 10 - 35 wt.-%, even more preferably 10 - 30 wt.-%, based on the weight of the copolymer and/or
- a melt flow rate determined according to ISO 1133-1:2011 (190 °C/2.16 kg) of not more than 100 g/10 min, preferably not more than 50 g/10 min, more preferably not more than 25 g/10 min, particularly in the range of 1 - 75 g/10 min, preferably 1 - 50 g/10 min, more preferably 1 - 35 g/10 min, even more preferably 1 - 15 g/10 min and/or
- a melting temperature (Tₘ) determined by DSC according to ISO 11357-3:2018 standard of at or below 175 °C, preferably at or below 150 °C, particularly in the range of 50 - 135 °C, preferably 60 - 125 °C, more preferably 65 - 115 °C.

According to one or more embodiments, the at least one polymer **P1** comprises the at least one soft ethylene vinyl acetate copolymer **P11** and the at least one hard ethylene vinyl acetate copolymer **P12,** wherein the ratio of the weight of the at least one soft ethylene vinyl acetate copolymer **P11** to the weight of the at least one hard ethylene vinyl acetate copolymer **P12** is preferably in the range of from 5:1 to 1:5, more preferably from 3:1 to 1:3, even more preferably from 3:1 to 1:2, still more preferably from 3:1 to 1:1.5.

According to one or more embodiments, the first functional layer comprises:
a) 35 - 85 wt.-%, preferably 40 - 80 wt.-%, more preferably 45 - 75 wt.-% of the at least one polymer **P1** and
b) 10 - 65 wt.-%, preferably 15 - 60 wt.-%, more preferably 20 - 55 wt.-% of the at least one solid filler **F,** all proportions being based on the total weight of the first functional layer.

According to one or more embodiment, the sum of the amounts of the at least one polymer **P1** the at least one solid filler **F** comprises at least 75 wt.-%, preferably at least 85 wt.-%, more preferably at least 90 wt.-%, even more preferably at least 95 wt.-%, of the total weight of the first functional layer.

The at least one solid filler **F** is preferably present in the functional layer as individual solid particles or as aggregates of one or more solid particles, which are dispersed in a continuous phase comprising the at least one polymer **P1.** The expression "dispersed in a continuous phase" is understood to mean that the individual solid particles or aggregates of one or more particles are at least partially, preferably completely, surrounded by the continuous phase comprising the at least one polymer **P1.** In case the functional layer contains one or more mineral binders, i.e. mineral fillers that undergo a hydration reaction in the presence of water, it is preferred that these do not form interconnected solid networks of hydrated mineral binders within the functional layer. Consequently, it may be preferred that the functional layer is essentially free, more preferably completely free, of interconnected solid networks of hydrated mineral binders at least before the sealing device is used for waterproofing of a substrate.

Preferably, the particles of the at least one solid filler **F** are distributed throughout the entire volume of the first functional layer. The term "distributed throughout" means that essentially all portions of the first functional layer contain particles of the at least one solid filler **F** but it does not necessarily imply that the distribution of the particles is completely uniform throughout the first functional layer.

It may also be preferable that the first functional layer comprises a homogeneously mixed mixture of the at least one polymer **P1** and the at least one solid filler **F.** A "homogeneously mixed mixture" refers in the present disclosure to compositions, in which the individual constituents are distributed substantially homogeneously in the composition. A homogeneously mixed mixture of the at least one polymer **P1** and the at least one solid filler **F** refers, therefore, to compositions in which the particles of the at least one solid filler **F** are homogeneously/uniformly distributed in a polymer phase comprising the at least one polymer **P1.** For a person skilled in the art it is clear that within such mixed compositions there may be regions formed, which have a slightly higher concentration of one of the constituents than other regions and that a 100 % homogeneous distribution of all the constituents is generally not achievable. Such mixed compositions with "imperfect" distribution of constituents, however, are also intended to be included by the term "homogeneously mixed mixture" in accordance with the present invention.

Preferably, the at least one solid filler **F** has a median particle size dso of not more than 150 µm, more preferably not more than 100 µm. According to one or more embodiments, the at least one solid filler **F** has a median particle size dso of 0.1 - 100 µm, preferably 0.15 - 50 µm, more preferably 0.15 - 25 µm, even more preferably 0.25 - 15 µm.

The term "particle size" refers in the present disclosure to the area-equivalent spherical diameter of a particle (Xarea). The term "median particle size dso" refers to a particle size below which 50 % of all particles by volume are smaller than the dso value. In analogy, the term d₉₀ particle size refers in the present disclosure to a particle size below which 90 % of all particles by volume are smaller than the d₉₀ value and term "d₁₀ particle size" refers to a particle size below which 10 % of all particles by volume are smaller than the d₁₀ value. A particle size distribution can be measured by laser diffraction according to the method as described in standard ISO 13320:2009 using a wet or dry dispersion method and for example, a Mastersizer 2000 device (trademark of Malvern Instruments Ltd, GB).

According to one or more embodiments, the at least one solid filler **F** comprises at least one mineral binder **F1** and/or at least one inert mineral filler **F2.**

The term "mineral binder" refers in the present disclosure to mineral materials, which undergo a hydration reaction in the presence of water. Suitable mineral binders include, for example, hydraulic binders, non-hydraulic binders, latent hydraulic binders, and pozzolanic binders.

The term "inert mineral filler" refers in the present disclosure to mineral fillers, which, unlike mineral binders do not undergo a hydration reaction in the presence of water. Examples of suitable inert mineral fillers include sand, granite, calcium carbonate, magnesium carbonate, clay, expanded clay, diatomaceous earth, pumice, mica, kaolin, dolomite, xonotlite, perlite, vermiculite, Wollastonite, barite, cristobalite, silica, fumed silica, fused silica, glass beads, hollow glass spheres, ceramic spheres, bauxite, comminuted concrete, and zeolites.

It may be preferred that in case the at least one solid filler **F** comprises mineral binders, at least a portion of said mineral binders are in non-hydrated form. The expression "non-hydrated form" is understood to mean that the hydraulic binders have not been reacted in a hydration reaction. According to one or more embodiments, the at least one solid filler **F** comprises at least one mineral binder **F1,** wherein at least 50 wt.-%, more preferably at least 75 wt.-%, even more preferably at least 85 wt.-%, still more preferably at least 95 wt.-%, of the mineral binders **F1** are present in the first functional layer in non-hydrated form.

According to one or more embodiments, the at least one mineral binder **F1** comprises at least one hydraulic binder **F11.**

The term "hydraulic binder" refers the present disclosure to an inorganic material or blend, which forms a paste when mixed with water, and which sets and hardens by a series of hydration reactions resulting in formation of solid mineral hydrates or hydrate phases, which are not soluble in water or have a very low water-solubility. Hydraulic binders, such as Portland cement, can harden and retain their strength even when exposed to water, for example underwater or under high humidity conditions. In contrast, the term "non-hydraulic binder" refers to substances, which harden by reaction with carbon dioxide and which, therefore, do not harden in wet conditions or under water.

Examples of suitable hydraulic binders include hydraulic cements, such as Portland cement, aluminate cement, calcium sulfoaluminate cement, and hydraulic lime.

The term "Portland cement" as used herein is intended to include those cements normally understood to be "Portland cements", particularly those described in European Standard EN-197. Portland cement consists mainly of tri-calcium silicate (alite) (C₃S) and dicalcium silicate (belite) (C₂S). Preferred Portland cements include the types CEM I, CEM II, CEM III, CEM IV, and CEM V compositions of the European standard EN 197-1:2018-11. However, all other Portland cements that are produced according to another standard, for example, according to ASTM standard, British (BSI) standard, Indian standard, or Chinese standard are also suitable.

According to one or more preferred embodiments, the at least one hydraulic binder **F11** comprises a hydraulic cement, preferably a Portland cement.

According to one or more embodiments, the at least one mineral binder **F1** comprises at least one non-hydraulic binder **F12.**

Examples of suitable non-hydraulic binders include air-slaked lime (non-hydraulic lime) and gypsum. The term "gypsum" refers in the present disclosure to any known form of gypsum, in particular calcium sulfate dehydrate, calcium sulfate α-hemihydrate, calcium sulfate β-hemihydrate, or calcium sulfate anhydrite or mixtures thereof.

According to one or more embodiments, the at least one mineral binder **F1** comprises at least one latent hydraulic binder **F13.**

The term "latent hydraulic binder" refers in the present disclosure to type II concrete additives with a "latent hydraulic character" as defined in DIN EN 206-1:2000 standard. These types of mineral binders are calcium aluminosilicates that are not able to harden directly or harden too slowly when mixed with water. The hardening process is accelerated in the presence of alkaline activators, which break the chemical bonds in the binder's amorphous (or glassy) phase and promote the dissolution of ionic species and the formation of calcium aluminosilicate hydrate phases.

Examples of suitable latent hydraulic binders include ground granulated blast furnace slag. Ground granulated blast furnace slag is typically obtained from quenching of molten iron slag from a blast furnace in water or steam to form a glassy granular product and followed by drying and grinding the glassy into a fine powder.

According to one or more embodiments, the at least one mineral binder **F1** comprises at least one pozzolanic binder **F14.**

The term "pozzolanic binder" refers in the present disclosure to type II concrete additives with a "pozzolanic character" as defined in DIN EN 206-1:2000 standard. These types of mineral binders are siliceous or aluminosilicate compounds that react with water and calcium hydroxide to form calcium silicate hydrate or calcium aluminosilicate hydrate phases.

Examples of suitable pozzolanic binders include natural pozzolans, such as trass, and artificial pozzolans, such as fly ash and silica fume. The term "fly ash" refers in the present disclosure to the finely divided ash residue produced by the combustion of pulverized coal, which is carried off with the gasses exhausted from the furnace in which the coal is burned. The term "silica fume" refers in the present disclosure to fine particulate silicon in an amorphous form. Silica fume is typically obtained as a by-product of the processing of silica ores such as the smelting of quartz in a silica smelter which results in the formation of silicon monoxide gas and which on exposure to air oxidizes further to produce small particles of amorphous silica.

According to one or more embodiments, the at least one solid filler **F** is composed of the at least one mineral binder **F1.**

According to one or more embodiments, the at least one solid filler **F** comprises at least one inert mineral filler **F2.**

According to one or more embodiments, the at least one inert mineral filler **F2** is selected from the group consisting of sand, granite, calcium carbonate, magnesium carbonate, clay, expanded clay, diatomaceous earth, pumice, mica, kaolin, potash, dolomite, xonotlite, perlite, vermiculite, Wollastonite, barite, cristobalite, silica (quartz), fumed silica, fused silica, bauxite, comminuted concrete, and zeolites, preferably from the group consisting of calcium carbonate, magnesium carbonate, diatomaceous earth, pumice, mica, dolomite, xonotlite, perlite, vermiculite, Wollastonite, barite, and comminuted (recycled) concrete.

According to one or more embodiments, the at least one solid filler **F** is composed of the at least one inert mineral filler **F2.**

In waterproofing applications, one of the important characteristics is the strength of adhesion by which a sealing device, such as a waterproofing membrane, is bonded to a substrate, for example a concrete surface, to be sealed against penetration of water. In case the strength of adhesion is too low, gaps are more easily formed between the membrane and the surface of the substrate, which may lead to loss of water tightness, particularly to loss of water tightness after infiltration. The term "watertightness after infiltration" describes the ability of the membrane to resist spreading of infiltrated water in the space between the membrane and the waterproofed surface and/or between individual layers of the membrane, after leakage in the membrane has occurred.

According to one or more embodiments, the sealing device exhibits a concrete adhesion strength of at least 5 N/50 mm, preferably at least 10 N/50 mm, more preferably at least 15 N/50 mm, determined as average peel resistance per unit width of the sealing device upon peeling the sealing device from a surface of a concrete specimen, which has been casted on the surface of a functional layer and hardened for 28 days under standard atmosphere (air temperature 23°C, relative air humidity 50%). The concrete adhesion strength is preferably measured using the method as described in the experimental part of the present disclosure.

It has been found out that the strength of adhesion by which the sealing device is bonded to a substrate can be improved if the primary exterior surface, i.e. the first major surface, of the first functional layer has a certain surface roughness. Such surface roughness is believed to enable the formation of a mechanical bond between the first functional layer and the adhesive composition, such as a cementitious composition, casted against the first major surface of the first functional layer.

The thickness of the first functional layer typically varies along the length and width of the sealing device due to the unsymmetrical surface structure present on the first major surface of the first functional layer. Some of the pores and cavities of the first functional layer may even reach the first major surface of the polymeric carrier layer, in which case the thickness of the first functional layer measured at the particular location may not even be measurable. However, it may be preferred that the first functional layer has a maximum thickness of not more than 0.5 mm, preferably not more than 0.35 mm, more preferably not more than 0.25 mm, even more preferably not more than 0.15 mm, still more preferably not more than 0.1 mm.

The first functional layer may further comprise one or more additives, such as UV- and heat stabilizers, antioxidants, plasticizers, flame retardants, dyes, pigments such as titanium dioxide and carbon black, matting agents, antistatic agents, impact modifiers, biocides, and processing aids such as lubricants, slip agents, antiblock agents, and denest aids. It is preferred, that the total amount of these types of additives comprises not more than 10 wt.-%, preferably not more than 5 wt.-% of the total weight of the first functional layer.

According to one or more embodiments, the first functional layer has been obtained by extruding or co-extruding a molten polymer composition comprising the constituents of the first functional layer through a blown film extruder die. The molten polymer composition has preferably been obtained by melt-processing a starting composition comprising the constituents of the first functional layer. The term "melt-processing" refers in the present disclosure to a process, in which at least one molten polymeric component is intimately mixed with at least one other component, which may be another molten polymeric component or a solid component, such as a filler or an additive, until a melt blend, i.e. a substantially homogeneously mixed mixture of the polymeric component(s) and the other constituents is obtained.

The composition of the polymeric carrier layer is not particularly restricted, and it mainly depends on the intended application of the sealing device. Generally, the polymeric carrier layer should provide resistance to environmental influences and should not decompose or be mechanically damaged even under prolonged influence of water or moisture.

It is furthermore preferred that the polymeric carrier layer is in the form of a flexible layer. This allows the sealing device to be wound into rolls, typically during production, and then easily applied to a surface of a substrate to be protected. Preferably, the polymeric carrier layer has a tensile modulus of elasticity determined according to EN ISO 527-3 of not more than 1000 MPa, preferably not more than 750 MPa, more preferably not more than 500 MPa, even more preferably not more than 350 MPa, still more preferably not more than 250 MPa.

Preferably, the polymeric carrier layer comprises at least one polymer **P2** selected from the group consisting of polyvinylchloride, polyolefins, halogenated polyolefins, rubbers, and ketone ethylene esters. The at least one polymer **P2** preferably comprises at least 35 wt.-%, more preferably at least 55 wt.-%, even more preferably at least 75 wt, of the total weight of the polymeric carrier layer.

Suitable polyolefins and rubbers for use as the at least one polymer **P2** include the ones presented suitable for use as the at least one polymer **P1** of the first functional layer.

According to one or more embodiments, the at least one polymer **P2** has:
- a melting temperature (Tₘ) determined by DSC according to ISO 11357 standard in the range of 55 - 250 °C, preferably 60 - 200 °C, more preferably 65 - 175 °C, even more preferably 65 - 165 °C, still more preferably 70 - 155 °C and/or
- a glass transition temperature (T_{g}) determined by dynamical mechanical analysis (DMA) as the peak of the measured loss modulus (G") curve using an applied frequency of 1 Hz and a strain level of 0.1 % of at or below 0 °C, preferably at or below -10 °C, more preferably at or below -20 °C, even more preferably at or below -25 °C, still more preferably at or below -30 °C.

The at least one polymer **P2** is preferably selected to be compatible with the at least one polymer **P1.** By polymers being "compatible" is understood to mean that the properties of a blend composed, for example, of the at least one polymer **P1** and the at least one polymer **P2,** are not inferior to those of the at least one polymer **P1** and the at least one polymer **P2.**

It may also be preferable that the at least one polymer **P2** is at least partially miscible with the at least one polymer **P1.** By the polymers being "miscible" is understood to mean that a polymer blend obtained by blending of polymers has a negative Gibbs free energy and heat of mixing. Polymer blends composed of entirely miscible polymers tend to have one single glass transition temperature, which can be measured using dynamic mechanical thermal analysis (DMTA). The glass transition temperature can be determined, for example, as the peak of the measured tan delta curve (ratio of storage and loss moduli).

According to one or more embodiment, the at least one polymer **P2** comprises at least one thermoplastic polymer, preferably selected from the group consisting of polyvinylchloride, polyethylene, ethylene α-olefin copolymers, ethylene acrylic ester copolymers, ethylene vinyl acetate copolymers, polypropylene, and propylene α-olefin copolymers, more preferably from the group consisting of polyethylene, ethylene α-olefin copolymers, ethylene acrylic ester copolymers, and ethylene vinyl acetate copolymers.

According to one or more embodiments, the at least one polymer **P2** comprises at least one polyolefin **P21** selected from the group consisting of polyethylenes, ethylene-α-olefin copolymers, polypropylene, and propylene-α-olefin copolymers.

According to one or more embodiments, the at least one polyolefin **P21** is a polyethylene or an ethylene-α-olefin copolymer, preferably a polyethylene, preferably selected from the group consisting of very-low-density polyethylene, low-density polyethylene, linear low-density polyethylene, medium-density polyethylene, high-density polyethylene, and ultra-high-molecular-weight polyethylene, more preferably from the group consisting of low-density polyethylene, linear low-density polyethylene, medium-density polyethylene, and high-density polyethylene.

According to one or more embodiments, the at least one polymer **P2** comprises at least one ethylene vinyl acetate copolymer **P22,** preferably having a content of a structural unit derived from vinyl acetate of 4 - 70 wt.-%, preferably 7 - 50 wt.-%, more preferably 9 - 40 wt.-%, even more preferably 12 - 30 wt.-%, still more preferably 12 - 25 wt.-%, based on the weight of the copolymer.

According to one or more embodiments, the ratio of the weights of the at least one polyolefin **P21** and the at least one ethylene vinyl acetate copolymer **P22** in the polymeric carrier layer is in the range of from 5:1 to 1:5, preferably from 3:1 to 1:3, more preferably from 2:1 to 1:2, even more preferably from 1.5:1 to 1:1.5, still more preferably from 1.25:1 to 1:1.25.

The polymeric carrier layer may further contain one or more additives such as UV- and heat stabilizers, antioxidants, plasticizers, flame retardants, dyes, pigments such as titanium dioxide and carbon black, matting agents, antistatic agents, impact modifiers, biocides, and processing aids such as lubricants, slip agents, antiblock agents, and denest aids. It is however, preferred that the total amount of these types of additives comprises not more than 45 wt.-%, preferably not more than 35 wt.-%, of the total weight of the polymeric carrier layer.

According to one or more embodiments, the sealing device further comprises a second functional layer (3') located on the lower side of the polymeric carrier layer (2) opposite to the side of the first functional layer (3), the second functional layer (3') comprising:
a) 25 - 95 wt.-%, preferably 35 - 85 wt.-%, of the at least one polymer **P1'** and
b) 5 - 75 wt.-%, preferably 10 - 65 wt.-%, of the at least one solid filler **F',** all proportions being based on the total weight of the second functional layer (3').

The preferences given above to the at least one polymer **P1** and to the at least one solid filler F of the first functional layer apply equally to the to the at least one polymer **P1'** and to the at least one solid filler **F'** of the second functional layer, respectively.

Preferably, the polymeric carrier layer and the second functional layer are directly connected to each other over at least a portion of their opposing major surfaces.

Preferably, the second functional layer has first and second major surfaces, wherein at least 50 %, more preferably at least 75 wt.-%, even more preferably at least 95 % of the area of the first major surface of the second functional layer is directly connected to the second major surface of the polymeric carrier layer. According to one or more embodiments, essentially the entire area of the first major surface of the second functional layer is directly connected to the second major surface of the polymeric carrier layer.

Preferable, the second functional layer covers at least 50 %, more preferably at least 75 %, even more preferably at least 95 %, of the area of the second major surface of the polymeric carrier layer. According to one or more embodiments, the second functional layer covers essentially the entire area of the second major surface of the polymeric carrier layer.

According to one or more embodiments, the second functional layer comprises:
a) 35 - 85 wt.-%, preferably 40 - 80 wt.-%, more preferably 45 - 75 wt.-% of the at least one polymer **P1'** and
b) 10 - 65 wt.-%, preferably 15 - 60 wt.-%, more preferably 20 - 55 wt.-% of the at least one solid filler **F',** all proportions being based on the total weight of the second functional layer.

According to one or more embodiments, the polymeric carrier layer is a multilayer foil comprising a barrier layer comprising at least one polymer **P3** selected from the group consisting of ethylene vinyl alcohol, polyamide, and polyester and a first outer layer comprising at least one polymer **P4** selected from the group consisting of polyvinylchloride, polyolefins, halogenated polyolefins, rubbers, and ketone ethylene esters. In these embodiments, the first major surface of the first outer layer facing away from the barrier layer forms the first major surface of the polymeric carrier layer.

Sealing devices containing a multilayer foil as the polymeric carrier layer with a barrier layer comprising the at least one polymer **P3** are especially suitable for use as gas barrier membranes, such as radon, carbon dioxide, and methane barriers, and volatile organic compound (VOC) barrier membranes.

Preferably, the at least one polymer **P3** comprises at least 35 wt.-%, preferably at least 55 wt.-%, more preferably at least 75 wt.-%, even more preferably at least 85 wt.-%, of the total weight of the barrier layer and/or the at least one polymer **P4** comprises at least 35 wt.-%, preferably at least 55 wt.-%, more preferably at least 75 wt.-%, even more preferably at least 85 wt.-%, of the total weight of the first outer layer.

The term "ethylene vinyl alcohol (EVOH)" refers in the present disclosure to copolymers of vinyl alcohol and ethylene. Suitable ethylene vinyl alcohols can be obtained, for example, by hydrolyzation of ethylene vinyl acetate copolymers or by chemical reaction of ethylene monomers with vinyl alcohol.

Suitable ethylene vinyl alcohols to be used as the at least one polymer **P3** have:
- a molar content of ethylene comonomers in the range of 10 - 75 mol.-%, preferably 15 - 65 mol.-% and/or
- a hydrolyzation degree of at least 35 %, preferably at least 50 %, more preferably at least 75 %, in case the ethylene vinyl alcohol has been obtained by hydrolyzation of ethylene vinyl acetate copolymers.

Suitable ethylene vinyl alcohols are commercially available, for example, under the trade names of Soarnol^{®} (from Mitsubishi Chemicals) and Eval^{®} (from Kuraray).

Suitable polyamides to be used as the at least one polymer **P3** include aromatic and aliphatic crystalline and semi-crystalline polyamides. Amorphous polyamides are generally not preferred. The term "amorphous polyamide" refers here to polyamides that lack a crystalline melting point (Tₘ) as determined by differential scanning calorimetric (DSC) or an equivalent technique. Amorphous polyamides are distinct from the crystalline or semi-crystalline polyamides, such as Nylon 6 and Nylon 12.

Suitable polyamides include, for example, homo polyamides, such as Nylon 6 (PA6), which is synthetized by ring-opening polymerization of caprolactam; Nylon 6-6 (PA66), which is synthesized by polycondensation of hexamethylenediamine and adipic acid; and Nylon 12 (PA12), which can be synthetized either by polycondensation of ω-aminolauric acid or by ring-opening polymerization of laurolactam. Bioplastic polyamides, such as Nylon 11, which is synthetized by polymerization of 11-aminoundecanoic acid, are also suitable. Further suitable are aliphatic and aromatic co-polyamides, such as copolymers of PA6 and isophorone diisocyanate (IPDI).

Suitable polyamides are commercially available, for example, under the trade name of Grivory^{®} (from EMS Chemie), such as Grivory^{®} G16 and G21, which are copolyamides having both linear aliphatic units and ring-like aromatic components; under the trade name of Versamid^{®} (from Gabriel Performance Products), such as Versamid^{®} 100, which is an aliphatic polyamide; under the trade name of Rilsan (from Arkema), such as Rilsan^{®} TMNO TLD, Rilsan^{®} BMNO TLD, and Rilsamid^{®} AMNO TLD; under the trade name of Vestamid^{®} (from Evonik); and under the trade name of ^{®}Durethan (from Lanxess), such as Durethan C 38F.

Suitable polyesters for use as the at least one polymer **P3** include, for example, poly(ethylene terephthalate) (PET) and poly(butylene terephthalate) (PBT).

Especially suitable poly(ethylene terephthalate)s to be used as the at least one polymer **P3** have:
- a high content of ethylene terephthalate units, such as at least 90 wt.-%, preferably at least 95 wt.-%, more preferably at least 97.5 wt.-%, based on the weight of the poly(ethylene terephthalate) and/or
- a low content of dioxyethylene terephthalate units, such as not more than 10 wt.-%, preferably not more than 5 wt.-%, more preferably not more than 2.5 wt.-%, based on the weight of the poly(ethylene terephthalate) and/or
- a melting temperature (Tₘ) determined by differential scanning calorimetry (DSC) according to ISO 11357-3 standard using a heating rate of 2 °C/min of at or above 200 °C, preferably at or above 225 °C, more preferably at or above 250 °C.

Suitable poly(ethylene terephthalate)s are commercially available, for example, under the trade name of Vituf ^{®} (from Goodyear Chemical Company); under the trade name of Impet^{®} (from Celanese), and under the trade name of Mylar^{®} (from Dupont).

According to one or more embodiments, the at least one polymer **P3** is selected from the group consisting of ethylene vinyl alcohol copolymer, polyethylene terephthalate, and polyamide, wherein:
- the ethylene vinyl alcohol copolymer is an ethylene vinyl alcohol copolymer resin having an ethylene content of 5 - 50 wt.-%, preferably 10 - 40 wt.-%, based on the weight of the copolymer and/or a residual ester content of not more than 5 wt.-%, preferably not more than 3 wt.-%, more preferably not more than 2 wt.-%, based on the weight of the copolymer resin and/or a homopolymer content of not more than 5 wt.-%, preferably not more than 3 wt.-%, more preferably not more than 2 wt.-%, based on the weight of the copolymer resin and
- the polyethylene terephthalate has a content of ethylene terephthalate units of at least 90 wt.-%, preferably at least 95 wt.-%, more preferably at least 97.5 wt.-%, based on the weight of the polyethylene terephthalate and/or a content of dioxyethylene terephthalate units of not more than 10 wt.-%, preferably not more than 5 wt.-%, more preferably not more than 2.5 wt.-%, based on the weight of the polyethylene terephthalate and
- the polyamide is an aromatic and aliphatic crystalline or a semi-crystalline homo polyamide or co-polyamide.

Suitable polyolefins and rubbers for use as the at least one polymer **P4** include the ones presented suitable for use as the at least one polymer **P1** of the first functional layer.

According to one or more embodiment, the at least one polymer **P4** comprises at least one thermoplastic polymer, preferably selected from the group consisting of polyvinylchloride, polyethylene, ethylene α-olefin copolymers, ethylene acrylic ester copolymers, and ethylene vinyl acetate copolymers, polypropylene, and propylene α-olefin copolymers, more preferably from the group consisting of polyethylene, ethylene α-olefin copolymers, ethylene acrylic ester copolymers, and ethylene vinyl acetate copolymers.

According to one or more embodiments, the multilayer foil further comprises a second outer layer comprising at least one polymer **P5** selected from the group consisting of polyvinylchloride, polyolefins, halogenated polyolefins, rubbers, and ketone ethylene esters, wherein the barrier layer is arranged between the first and second outer layers. In these embodiments, the second major surface of the second outer layer facing away from the barrier layer forms the second major surface of the polymeric carrier layer.

Preferably, the at least one polymer **P5** comprises at least 35 wt.-%, preferably at least 55 wt.-%, more preferably at least 75 wt.-%, even more preferably at least 85 wt.-%, of the total weight of the second outer layer.

Suitable polyolefins and rubbers for use as the at least one polymer **P5** include the ones presented suitable for use as the at least one polymer **P1** of the first functional layer.

According to one or more embodiment, the at least one polymer **P5** comprises at least one thermoplastic polymer, preferably selected from the group consisting of polyvinylchloride, polyethylene, ethylene α-olefin copolymers, ethylene acrylic ester copolymers, and ethylene vinyl acetate copolymers, polypropylene, and propylene α-olefin copolymers, more preferably from the group consisting of polyethylene, ethylene α-olefin copolymers, ethylene acrylic ester copolymers, and ethylene vinyl acetate copolymers.

At least in embodiments where the barrier layer comprises an ethylene vinyl alcohol or polyamide as the at least one polymer **P3,** a tie layer is preferably arranged between the barrier layer and the first outer layer as well as between the barrier layer and the second outer layer, in case present, to enable bonding of the barrier layer to the first and second outer layers by using thermal lamination means.

Suitable polymers for use in the tie layer include, for example, maleic anhydride functionalized polyolefins, such as maleic anhydride grafted homopolymers and copolymers of ethylene and propylene.

According to one or more embodiments, the tie layer comprises at least one maleic anhydride grafted polyolefin, preferably selected from the group consisting of maleic anhydride grafted polyethylene and maleic anhydride grafted polypropylene.

Preferably, the at least one maleic anhydride grafted polyolefin comprises at least 35 wt.-%, preferably at least 50 wt.-%, more preferably at least 75 wt.-%, even more preferably at least 85 wt.-%, of the total weight of the tie layer.

Preferred thicknesses of the barrier layer and first and second outer layers depend on the intended use of the sealing device.

According to one or more embodiments, the barrier layer has a thickness of not more than 200 µm, more preferably not more than 150 µm, even more preferably not more than 100 µm. According to one or more embodiments, barrier layer has a thickness in the range of 1 - 150 µm, preferably 2.5 - 125 µm, more preferably 5 - 100 µm, even more preferably 10 - 85 µm.

The thickness of the first and second outer layer is preferably not more than not more than 200 µm, more preferably not more than 150 µm, even more preferably not more than 100 µm. According to one or more embodiments, the first and second outer layers have a thickness in the range of 1 - 150 µm, preferably 2.5 - 125 µm, more preferably 5 - 100 µm, even more preferably 10 - 85 µm.

The polymers **P4** and **P5** are preferably selected to be compatible with the at least one polymer **P1** and the at least one polymer **P1'** of the first and second functional layer, respectively. It may also be preferable that the at least one polymer **P4** is at least partially miscible with the at least one polymer **P1** and the at least one polymer **P5** is at least partially miscible with the at least one polymer **P1'.**

According to one or more embodiments, the multilayer foil is a blown film. The term "blown film" refers to a film produced by a blown film co-extrusion process.

There are no strict limitations for the width and length of the polymeric carrier layer, and these depend on the intended use of the sealing device. The term "width" and "length" refer to the two perpendicular dimensions measured in the horizontal plane of the upper and lower major surfaces of a sheet-like element. Generally, the "width" of a sheet like element is the smaller of the horizontal dimensions of the sheet-like element. Consequently, the "width" of the polymeric carrier layer refers to the minor dimension measured in the horizontal plane of the polymeric carrier layer in a direction perpendicular to the length of the polymeric carrier layer.

According to one or more embodiments, the sealing device is provided in form of a broad sheet, wherein the polymeric carrier layer has a width in the range of 0.75 - 5 m, preferably 0.85 - 3.5 m, more preferably 1 - 2.5 m. According to one or more further embodiments, the sealing device is provided in form of a narrow strip, wherein the polymeric carrier layer has a width in the range of 10 - 500 mm, preferably 50 - 350 mm, more preferably 75 - 300 mm.

The sealing device of the present invention is typically provided in form of a prefabricated article, which is delivered to the construction site in form of rolls, which are then unwounded and cut to provide sheet-like articles having length of several times the width.

The preferences given above to the polymeric carrier layer, the first and second functional layers, the at least one polymer **P1** and **P1',** the at least one solid fillers **F** and **F',** the at least one surfactant **SF,** and to the at least one polymer **P2,** apply equally to all other subjects of the present invention unless stated otherwise.

Another subject of the present invention is a method for producing a sealing device of the present invention, the method comprising a step of extruding or co-extruding a first molten polymer composition comprising the constituents of the polymeric carrier layer and a second molten polymer composition comprising the constituents of the first functional layer through a blown film extruder die.

The first molten polymer composition has preferably been obtained by melt-processing a first starting composition comprising the constituents of the polymeric carrier layer and the second molten polymer composition has been obtained by melt-processing a second starting composition comprising the constituents of the first functional layer.

The melt processing of the first and second starting compositions can be conducted as a batch process using any conventional mixer, such as a Brabender, Banbury, or roll mixer or as continuous process using a continuous type mixer, preferably an extruder. The constituents of the starting compositions are preferably fed into the extruder using a conventional feeding system comprising a feed hopper and feed extruder. Alternatively, some or all the constituents of the starting compositions may be directly fed into the extruder as individual streams, as a pre-mix, a dry blend, or as a master batch. Furthermore, the constituents of the starting compositions can first be processed in a compounding extruder to pellets or granules, which are then fed into the extruder.

Especially in case the at least one solid filler **F** comprises hydraulic binders, it may be preferred that the second starting composition contains only minor amounts of water. According to one or more embodiments, the second starting composition comprises less than 10 wt.-%, preferably less than 7.5 wt.-%, more preferably less than 5 wt.-%, even more preferably less than 3.5 wt.-% of water, based on the total weight of the second starting composition.

According to one or more embodiments, the method for producing a sealing device comprises a further step of extruding or co-extruding a third molten polymer composition comprising the constituents of the second functional layer through a blown film extruder die.

Preferably, the third molten polymer composition is obtained by melt-processing a third starting composition comprising the constituents of the second functional layer.

According to one or more embodiments, the first and/or second and/or third starting composition comprises at least one chemical blowing agent CBA.

Chemical blowing agents, also known as chemical foaming agents, are typically solids that liberate gas(es) by means of a chemical reaction, such as decomposition, when exposed to elevated temperatures. Inorganic, organic, exothermic, and endothermic chemical blowing agents are all equally suitable. Endothermic blowing agents may be preferred over exothermic blowing agents, since the latter have been found to have potential to trigger respiratory sensitivity, are generally not safe from a toxicological point of view or have a risk of explosion. Furthermore, by-products such as ammonia, formamide, formaldehyde or nitrosamines are released during decomposition of exothermic blowing agents and these substances have been classified as hazardous substances.

According to one or more embodiments, the at least one chemical blowing agent **CBA** has a maximum decomposition peak temperature measured by Differential Scanning Calorimetry (DSC) in the range of 85 - 225 °C, preferably 95 - 215 °C, more preferably 105 - 205 °C, even more preferably 115 - 195 °C. The maximum decomposition peak measured by DSC is preferably determined by using a DSC822e differential scanning calorimeter from Mettler-Toledo by keeping the sample for 2 min at 25 °C, then heating the sample from 25 °C to 280 °C at a rate of 5 °C/min, then keeping the sample for 2 min at 280 °C and finally cooling the sample from 280 °C to 25 °C at a rate of 10 °C/min.

Suitable substances to be used as the at least one chemical blowing agent **CBA** include, for example, azodicarbonamide, azobisisobutyronitrile, azocyclohexyl nitrile, dinitrosopentamethylene tetramine, azodiamino benzene, calcium azide, 4,4'-diphenyldisulphonyl azide, benzenesulphonyl hydrazide, 4,4-oxybenzenesulphonyl semicarbazide, 4,4-oxybis(benzenesulphonyl hydrazide), diphenyl sulphone-3,3-disulphonyl hydrazide, p-toluenesulphonyl hydrazide, p-toluenesulphonyl semicarbazide, trihydrazino triazine, N,N'-dimethyl-N,N'-dinitrosoterephthalamide, diazoaminobenzene, diazoaminotoluene, hydrazodicarbonamide, barium azodicarboxylate, 5-hydroxytetrazole, sodium bicarbonate, ammonium carbonate, ammonium bicarbonate, potassium bicarbonate, and organic acids.

Suitable organic acids for use as the at least one chemical blowing agent **CBA** include, for example, monocarboxylic acids, such as acetic acid and propionic acid, solid polycarboxylic acids, such as solid, hydroxy-functionalized or unsaturated dicarboxylic, tricarboxylic, tetracarboxylic or polycarboxylic acids, in particular citric acid, tartaric acid, malic acid, fumaric acid, and maleic acid.

Most of the above listed preferable chemical blowing agents, such as sodium bicarbonate, are solid at normal room temperature and are typically provided in powder form. The particle size of such powders is preferably not too low in order to prevent premature decomposition the chemical blowing agent during a pre-mixing process, for example, during pre-mixing of the constituents of the first starting composition. A narrow particle size distribution may also be preferred in order to better control the decomposition temperature of the chemical blowing agent.

According to one or more embodiments, the at least one chemical blowing agent **CBA** is present in the first starting composition in form of solid particles having a median particle size dso in the range of 0.5 - 100 µm, preferably 1.0 - 75 µm, more preferably 2.5 - 50 µm, even more preferably 5 - 35 µm.

Although some of the compounds used in the present invention are characterized as useful for specific functions, the use of these compounds is not limited to their stated functions. For example, it is also possible that some of the substances presented above as chemical blowing agents can also be used as activators for the at least one chemical blowing agent **CBA.**

For example, commonly used activators for organic acid-based chemical blowing agents include hydrogen carbonate (bicarbonate) and carbonate salts, especially those of formula XHCO₃ or X₂CO₃, wherein X stands for a generic cation, such as Na⁺, K⁺, NH₄⁺, % Zn²⁺, % Mg²⁺, and % Ca²⁺, in particular Na⁺ and K⁺. On the other hand, these types of activators may themselves be suitable for use as the at least one chemical blowing agent.

According to one or more embodiments, the starting composition comprises, in addition to the at least one chemical blowing agent **CBA,** at least one activator for the at least one chemical blowing agent.

According to one or more embodiments, the at least one chemical blowing agent **CBA** is selected from the group consisting of bicarbonates of formula XHCO₃ and carbonates of formula X₂CO₃, wherein X stands for a generic cation, in particular Na⁺, K⁺, NH₄⁺, ½ Zn²⁺, ½ Mg²⁺, or ½ Ca²⁺, preferably from the group consisting of bicarbonates of formula XHCO₃, wherein X stands for a generic cation, in particular Na⁺, K⁺, NH₄⁺, ½ Zn²⁺, ½ Mg²⁺, or ½ Ca²⁺, more preferably from the group consisting of sodium and potassium bicarbonates.

The at least one chemical blowing agent **CBA** preferably comprises not more than 3.5 wt.-%, more preferably not more than 2.5 wt.-%, even more preferably not more than 1.5 wt.-%, still more preferably not more than 1 wt.-%, most preferably not more than 0.75 wt.-%, of the total weight of the first and/or second and/or third starting composition.

According to one or more embodiments, the at least one chemical blowing agent **CBA** comprises at least 0.05 wt.-%, preferably at least 0.1 wt.-%, more preferably at least 0.15 wt.-%, of the total weight of the first and/or second and/or third starting composition. According to one or more further embodiments, the at least one chemical blowing agent **CBA** comprises 0.01 - 1.5 wt.-%, preferably 0.05 - 1.0 wt.-%, more preferably 0.1 - 0.75 wt.-%, even more preferably 0.15 - 0.5 wt.-%, still more preferably 0.15 - 0.35 wt.-%, of the total weight of the first and /or second and/or third starting composition.

In case the first and/or second and/or third starting composition comprises a chemical blowing agent, the extruder is preferably operated with closed venting unit(s). It is essential that at least a significant part of the blowing gases released inside the extruder barrel are kept trapped in the melt-processed polymer composition and not released before the molten polymer composition exits the blown film extruder die.

According to one or more embodiments, the polymeric carrier layer is a multilayer foil comprising the barrier layer and the first outer layer, wherein the method comprises a step extruding or co-extruding a molten polymer composition comprising the constituents of the barrier layer, a molten polymer composition comprising the constituents of the first outer layer, and a molten polymer composition comprising the constituents of the first functional layer.

Preferably, the method for producing a sealing device of the present invention is a blown film extrusion process, preferably a blown film co-extrusion process.

In a blown film extrusion process, a molten polymer composition obtained from an extruder is forced through an upwards facing opening of a blown film extruder die, typically an upright cylinder with an annular opening similar to a pipe extrusion die. The molten polymer composition is extruded as "a film tube bubble" that is pulled upwards from the die by suitable means, for example using pair of nip rolls arranged high above the die. The nip rolls collapse the film tube bubble into a foil and, which is then winded onto a cardboard or another core using a winder. Thickness of the foil can be controlled by adjusting the speed of the nip rollers. The center of a blown film extruder die comprises an outlet through which compressed air or other gases can be forced into the extruded profile to adjust the volume of the film tube bubble. As the film tube bubble moves away from the die it cools and solidifies. Typically, the extruder die also comprises a cooling ring that blows air onto the film tube bubble to enhance the cooling of the film tube bubble as it travels upwards.

In a blown film co-extrusion process, multiple molten polymer compositions corresponding to the compositions of the individual layers are simultaneously forced though a co-extrusion die to form a multi-layer film tube bubble. The extrusion apparatus contains separate extruders for each molten polymer composition and a multi-layer blown film extruder die.

The preferred extrusion temperature depends on the embodiment of the sealing device, in particular on the type polymer basis of the individual layers. The term "extrusion temperature" refers to the temperature of a molten polymer composition at the end of the metering zone just before the composition enters the inlet of the blown film extruder die. According to one or more embodiments, the extrusion temperature is in the range of 50 - 300 °C, preferably 100 - 260 °C, more preferably 100 - 240 °C, even more preferably 125 - 200°C.

The preferred extrusion pressure also depends on the embodiment of the sealing device, in particular on the type polymer basis and amount of solid fillers in the individual layers. The term "extrusion pressure" refers to the pressure of the molten polymer composition at the end of the metering zone just before the composition enters the inlet of the blown film extruder die. According to one or more embodiments, the extrusion pressure is in the range of 25 - 500 bar, preferably 50 - 500 bar, more preferably 65 - 450 bar, even more preferably 75 - 400 bar.

Another subject of the present invention is a sealing device obtained by using the method for producing a sealing device according to the present invention.

Still another subject of the present invention is a use of the sealing device according to the present invention as a waterproofing membrane, gas barrier membrane, volatile organic compound (VOC) barrier membrane, vapor barrier membrane, vapor retarder membrane, roofing membrane, façade membrane, or geomembrane, preferably as a pre- or post-applied waterproofing, gas barrier, volatile organic compound (VOC) barrier, vapor barrier, or vapor retarder membrane, or as a façade or roofing membrane.

According to one or more embodiments, the use of the sealing device as a pre-applied waterproofing, gas barrier, or VOC barrier membrane comprises steps of:
I') Applying a sealing device according to the present invention to a surface of the substrate to be sealed such that a second major surface of the polymeric carrier layer is facing the surface of the substrate,
II') Casting a fresh concrete composition on a first major surface of the first functional layer facing away from the polymeric carrier layer, and
III') Letting the fresh concrete composition to harden.

The term "fresh concrete composition" or "liquid concrete composition" designate concrete compositions before hardening, particularly before setting. The casted concrete composition after hardening can be part of a structure, in particular, an above-ground or underground structure, for example a building, garage, tunnel, landfill, water retention, pond, dike or an element for use in prefabricated constructions.

According to one or more embodiments, use of the sealing device as a post-applied waterproofing, gas barrier, volatile organic compound (VOC) barrier, vapor barrier, or vapor retarder membrane, or as a façade or roofing membrane comprises steps of:
I) Providing a sealing device according to the present invention,
II) Applying a layer of an adhesive on at least a portion of the surface of a substrate to be sealed,
III) Contacting the layer of adhesive with a first major surface of the first functional layer facing away from the polymeric carrier layer.

The adhesive can be a fresh cementitious composition, or a synthetic resin-based adhesive composition, for example, a reactive epoxy-based, polyurethane-based, or acrylic-based adhesive composition, or a non-reactive thermoplastic-based adhesive composition, such as an acrylic dispersion adhesive, or rubber-based adhesive composition.

The term "cementitious composition" refers to concrete, shotcrete, grout, mortar, paste or a combination thereof. The terms "paste", "mortar", "concrete", "shotcrete", and "grout" are well-known terms in the State-of-the-Art. Pastes are mixtures comprising a hydraulic cement binder, usually Portland cement, masonry cement, or mortar cement. Mortars are pastes additionally including fine aggregate, for example sand. Concrete are mortars additionally including coarse aggregate, for example crushed gravel or stone. Shotcrete is concrete (or sometimes mortar) conveyed through a hose and pneumatically projected at high velocity onto a surface. The cementitious compositions can be formed by mixing required amounts of certain components, for example, a hydratable cement, water, and fine and/or coarse aggregate, to produce the particular cementitious composition. The term "fresh cementitious composition" refers to a cementitious composition before hardening of the composition.

The substrate to be waterproofed can be any above or below ground structure, which is to be sealed against moisture and water, such as a structure of a wet room, for example a shower room, a therapy room in a hospital, a balcony, terrace, tank, or a swimming pool. The substrate can be a concrete, fiber concrete, metal, or a plywood substrate, or it may include an insulation board or a cover board and/or an existing polymeric membrane.

According to one or more further embodiments, the use of the sealing device as a roofing membrane comprises steps of:
I") Providing a sealing device according to the present invention,
II") Applying a layer of an adhesive composition on at least a portion of a surface of the substrate to be sealed to form a first adhesive film and on a first major surface of the first functional layer to form a second adhesive film,
III") Contacting the first and second adhesive films with each other to effect adhesive bonding between the substrate and the sealing device.

The adhesive composition used in this these embodiments is preferably a solvent- or water-based contact adhesive, such as a solvent- or water-based acrylic adhesive. Suitable solvent- and water-based contact adhesives are commercially available, for example, under the trade name of Sarnacol^{®} (from Sika AG).

### Examples

The followings compounds shown in Table 1 were used in the examples:

**Table 1**

| | |
|---|---|
| P11 | Ethylene vinyl acetate copolymer with 70 wt.-% of vinyl acetate, Mooney viscosity (ML (1+4) 100 °C) 25-30 |
| P12 | Ethylene vinyl acetate copolymer with 14 wt.-% of vinyl acetate, MFI 2.5 g/10min (190°C/2.16kg), melting range 90 - 95 °C |
| P13 | Ethylene vinyl acetate copolymer with 28 wt.-% of vinyl acetate, MFI 2.5 g/10min (190°C/2.16kg), melting range 70 - 75 °C |
| F | Cement, CEM II/B-M (T-LL) 52,5 N SN EN 197-1 cement |
| Additives | Thermal stabilizer, hindered amine light stabilizer, color pigment |
| P21 | Low density polyethylene |
| P22 | Ethylene vinyl acetate copolymer with 19 wt.-% of vinyl acetate, MFI 0.5-0.7 g/10min (190°C/2.16kg) |

### Preparation of sealing devices

The exemplary sealing devices comprising a polymeric carrier layer and first and second functional layers were prepared using a conventional blown film co-extrusion apparatus comprising three single screw extruders and a three-layer blown film extrusion die as shown in Figures 5 and 6.

Compositions of the polymeric carrier layer and the first and second functional layers were fed to the extruders using hoppers with standard dosage systems. The extruders 1-3 were equipped with a barrier screw to melt and homogenize of the polymer mixture and for pressure build up before the blow film die. The extrusion temperature of the extruders 1-3 was in the range of 100 - 260 °C and the extrusion pressure was 50 - 500 bar.

The compositions of the polymeric carrier layer and the first and second functional layers are presented in Table 2.

### Thickness of polymeric carrier layer

The thickness of the polymeric carrier layer was determined by using a measurement method as defined in DIN EN 1849-2 standard. An optical microscope of type Keyence VHX-600 with 30-fold magnification was used for measuring the thickness of the cross sections.

### Mass per unit area of the sealing devices

Circular samples having a diameter of 10 cm were cut from the sealing device prepared as discussed above. The mass of each sample was measured with accuracy of 0.01 g and the mass per unit areas were calculated by dividing the measured mass by the calculated area of the sample.

### Preparation of the concrete test specimen

Three sample strips with a dimension of 200 mm (length) x 50 mm (width) were cut from each tested sealing device prepared as described above. The sample strips were placed into formworks having a dimensions of 200 mm (length) x 50 mm (width) x 30 mm (height) with the functional layer facing upwards and with the second major surface of the polymeric carrier layer against the bottom of the formwork.

One edge of each sample strip on the side of the functional layer was covered with an adhesive tape having a length of 50 mm and width coinciding with the width of the strip to prevent the adhesion to the hardened concrete. The adhesive tapes were used to provide easier installation of the test specimens to the peel resistance testing apparatus.

For the preparation of concrete specimens, a batch of fresh concrete formulation was prepared. The fresh concrete formulation was obtained by mixing 8.9900 kg of a concrete dry batch of type MC 0.45 conforming to EN 1766 standard, 0.7553 kg of water and 0.0202 kg of Sikament-12S for five minutes in a tumbling mixer. The concrete dry batch of type MC 0.45 contained 1.6811 kg of CEM I 42.5 N cement (Normo 4, Holcim), 7.3089 kg of aggregates containing 3% Nekafill-15 (from KFN) concrete additive (limestone filler), 24% sand having a particle size of 0-1 mm, 36% sand having a particle size of 1-4 mm, and 37% gravel having a particle size of 4-8 mm. Before blending with water and Sikament-12S the concrete dry batch was homogenized for five minutes in a tumbling mixer.

The formworks containing the sample strips were subsequently filled with the fresh concrete formulation and vibrated for two minutes to release the entrapped air. After hardening for 12 hours, the test concrete specimens were stripped from the formworks and stored under standard atmosphere (air temperature 23°C, relative air humidity 50%) for 7 days or 28 days before measuring the peel resistances.

### Concrete adhesion strength

The measurement of concrete peel resistances was conducted in accordance with the procedure laid out in the standard DIN EN 1372:2015-06. A Zwick Roell AllroundLine Z010 material testing apparatus equipped with a Zwick Roell 90°-peeling device (type number 316237) was used for conducting the peel resistance measurements.

In the peel resistance measurements, a concrete specimen was clamped with the upper grip of the material testing apparatus for a length of 10 mm at the end of the concrete specimen comprising the taped section of the sample strip. Following, the strip was peeled off from the surface of the concrete specimen at a peeling angle of 90 ° and at a constant cross beam speed of 100 mm/min. During the measurements the distance of the rolls was approximately 570 mm. The peeling of the sample strip was continued until a length of approximately 140 mm of the strip was peeled off from the surface of the concrete specimen. The values for peel resistance were calculated as average peel force per width of the sample strip [N/ 50 mm] during peeling over a length of approximately 70 mm thus excluding the first and last quarter of the total peeling length from the calculation.

The peel resistance values ("Concrete adhesion strength") presented in Table 2 have been calculated as an average of three measurements conducted with the same sealing device.

### Adhesive bond strength

Sample strips with a dimension of 200 mm (length) x 50 mm (width) were cut from each tested sealing device prepared as described above. The sample strips were then adhesively bonded to a surface of concrete blocks having a dimensions of 200 mm (length) x 50 mm (width) x 30 mm (height). The adhesion peel resistances were measured according to the procedure as described above using a Zwick Roell AllroundLine Z010 material testing apparatus equipped with a Zwick Roell 90°-peeling device (type number 316237) and a constant cross beam speed of 100 mm/min. The peel resistance values ("Adhesive bond strength") presented in Table 2 have been calculated as an average of two measurements conducted with the same sealing device and adhesive.

The following commercially available adhesives were used for measuring adhesive bonding strengths:
Adhesive 1 = Schonox^{®} HA, available from Sika Deutschland GmbH
Adhesive 2 = SikaProof^{®} Adhesive-01, available from Sika Schweiz
Adhesive 3 = Sika Ceram^{®} 260 Starflex, available from Sika Schweiz
Adhesive 4 = Sika Ceram^{®} 290 Starlight, available from Sika Schweiz

### Watertightness after infiltration

The ability of a sealing device to resist lateral water migration after infiltration was determined using a modified watertightness measurement method based on the ASTM 5385M standard. In the modified watertightness measurement, a circular hole having a diameter of 10 mm was punched to the tested sealing device, which had been adhered to a concrete slab. The watertightness of the punched sealing device was determined using a same type of apparatus as described in the original ASTM 5385 standard method. The water pressure inside the test apparatus was increased to a value of 5 bar and the test was continued for seven days. At the end of the test period, the concrete slab was removed from the test apparatus and at least part of the tested sealing device was peeled off from the concrete surface. The length of the path water had invaded (migrated) between the surface of the concrete slab and the sealing device and/or between different layers of the sealing device was recorded as the "lateral water migration".

### Vapor diffusion

The vapor diffusion (S_{d} values) were measured according to EN 1931 standard.

**Table 2**

| **Composition functional layers [wt.-%]** | **Ref-1** | **Ex-1** | **Ex-2** | **Ex-3** | **Ex-4** |
|---|---|---|---|---|---|
| P11 | | 25.39 | 35.31 | 35.31 | 35.31 |
| P12 | | 9.58 | 8.3 | 8.3 | 8.3 |
| P13 | | 16.76 | 14.53 | 14.53 | 14.53 |
| F | | 47.89 | 41.52 | 41.52 | 41.52 |
| Additives | | 0.38 | 0.34 | 0.34 | 0.34 |
| Total | | 100.00 | 100.00 | 100.00 | 100.00 |

| **Composition carrier layer [wt.-%]** | | | | | |
|---|---|---|---|---|---|
| P21 | | 50.00 | 50.00 | 50.00 | 50.00 |
| P22 | | 50.00 | 50.00 | 50.00 | 50.00 |
| Total | | 100.00 | 100.00 | 100.00 | 100.00 |
| Total mass per unit area [g/m²] | | 104 | 142 | 160 | 196 |
| Concrete adhesion strength [N/50 mm] | | | | | |
| after 7 days | 43 | 13 | 12 | 15 | 34 |
| after 28 days | 27 | n.d. | n.d. | n.d. | n.d. |

| Adhesive bond strength [N/50 mm] | | | | | |
|---|---|---|---|---|---|
| Adhesive 1, 7 days | n.d. | 18 | 32 | 28 | 16 |
| Adhesive 1, 28 days | n.d. | 38 | 31 | 31 | 22 |
| Adhesive 2, 7 days | 42 | 44 | 53 | 42 | 62 |
| Adhesive 2, 28 days | 56 | 44 | 54 | 43 | 63 |
| Adhesive 3, 7 days | n.d. | 7 | 15 | 21 | 34 |
| Adhesive 3, 28 days | n.d. | 6 | 18 | 25 | 42 |
| Adhesive 4, 7 days | n.d. | 8 | 14 | 21 | 29 |
| Adhesive 4, 7 days | n.d. | 11 | 18 | 22 | 36 |
| Lateral water migration [cm] | n.d. | 0 | 0 | 0 | 0 |
| Vapor diffusion (S_{d}) value [m] | 96 | 15 | n.d. | n.d. | n.d. |

## Claims

1. A sealing device (1) comprising a polymeric carrier layer (2) and a first functional layer (3) comprising:
a) 25 - 95 wt.-%, preferably 35 - 85 wt.-%, of at least one polymer P1 and
b) 5 - 75 wt.-%, preferably 10 - 65 wt.-%, of at least one solid filler F, all proportions being based on the total weight of the first functional layer (3), wherein
the polymeric carrier layer (2) has a thickness of 10 - 450 µm, preferably 25 - 350 µm, and wherein the first functional layer (3) has a mass per unit area of not more than 450 g/m², preferably not more than 350 g/m².

2. The sealing (1) device according to claim 1, wherein the polymeric carrier layer (2) and the first functional layer (3) are directly connected to each other over at least a portion of their opposing major surfaces.

3. The sealing device (1) according to claim 1 or 2, wherein the at least one polymer **P1** comprises at least one ethylene vinyl acetate copolymer.

4. The sealing device (1) according to any one of previous claims, wherein the at least one polymer **P1** comprises at least one soft ethylene vinyl acetate copolymer **P11** having a content of a structural unit derived from vinyl acetate of 45 - 90 wt.-%, preferably 50 - 90 wt.-%, based on the weight of the copolymer.

5. The sealing device (1) according to any one of previous claims, wherein the at least one polymer **P1** comprises at least one hard ethylene vinyl acetate copolymer **P12** having a content of a structural unit derived from vinyl acetate of 5 - 40 wt.-%, preferably 5 - 35 wt.-%, based on the weight of the copolymer.

6. The sealing device (1) according to any one of previous claims, wherein the at least one solid filler **F** comprises at least one mineral binder **F1** and/or at least one inert mineral filler **F2.**

7. The sealing device (1) according to any one of previous claims, wherein the first functional layer (3) has been obtained by extruding or co-extruding a molten polymer composition comprising the constituents of the first functional layer (3) through a blown film extruder die.

8. The sealing device (1) according to any one of previous claims further comprising a second functional layer (3') located on the lower side of the polymeric carrier layer (2) opposite to the side of the first functional layer (2), the second functional layer (3') comprising:
a) 25 - 95 wt.-%, preferably 35 - 85 wt.-%, of the at least one polymer **P1'** and
b) 5 - 75 wt.-%, preferably 10 - 65 wt.-%, of the at least one solid filler **F',**
all proportions being based on the total weight of the second functional layer (3').

9. The sealing device (1) according to claim 8, wherein the polymeric carrier layer (2) and the second functional layer (3') are directly connected to each other over at least a portion of their opposing major surfaces.

10. The sealing device (1) according to any one of previous claims, wherein the polymeric carrier layer (2) is a multilayer foil comprising a barrier layer (4) comprising at least one polymer **P3** selected from the group consisting of ethylene vinyl alcohol, polyamide, and polyester and a first outer layer (5) comprising at least one polymer **P4** selected from the group consisting of polyvinylchloride, polyolefins, halogenated polyolefins, and ketone ethylene esters.

11. The sealing device (1) according to claim 10, wherein the at least one polymer **P4** is compatible with the at least one polymer **P1.**

12. The sealing device (1) according to claim 10 or 11, wherein multilayer foil further comprises a second outer layer (5') comprising at least one polymer **P5** selected from the group consisting of polyvinylchloride, polyolefins, halogenated polyolefins, and ketone ethylene esters, wherein the barrier layer (4) is arranged between the first and second outer layers (5, 5').

13. The sealing device (1) according to claim 12, wherein the at least one polymer **P5** is compatible with the at least one polymer **P1'.**

14. A method for producing a sealing device according to any one of previous claims, the method comprising a step of extruding or co-extruding a first molten polymer composition comprising the constituents of the polymeric carrier layer and a second molten polymer composition comprising the constituents of the first functional layer through a blown film extruder die.

15. The method according to claim 14, wherein the first molten polymer composition has been obtained by melt-processing a first starting composition comprising the constituents of the polymeric carrier layer and the second molten polymer composition has been obtained by melt-processing a second starting composition comprising the constituents of the first functional layer.

16. Use of the sealing device according to any one of claims 1-13 as a waterproofing membrane, gas barrier membrane, volatile organic compound (VOC) barrier membrane, vapor barrier membrane, vapor retarder membrane, façade membrane, roofing membrane, or as a geomembrane.
